# EUROPÄISCHE PATENTSCHRIFT

(11) **EP 2 677 201 B1**
(45) Veröffentlichungstag und Bekanntmachung des Hinweises auf die Patenterteilung: **18.12.2019**
(21) Anmeldenummer: 13171031.1
(22) Anmeldetag: 07.06.2013
(51) Int. Cl.: F16H 25/24

(54) **Linearantrieb**
Linear drive
Entraînement linéaire

(30) Priorität: 22.06.2012 DE 202012102315 U
(43) Veröffentlichungstag der Anmeldung: 25.12.2013
(73) Patentinhaber: RK Rose + Krieger GmbH Verbindungs- und Positioniersysteme, 32423 Minden (DE)
(72) Erfinder: Scheibe, Jörg, 31655 Stadthagen (DE)
(74) Vertreter: Dantz, Jan Henning

(56) Entgegenhaltungen:
- EP-A1- 0 327 705
- EP-A1- 2 584 223
- EP-A2- 0 828 093
- DE-A1-102008 012 842

## Beschreibung

Die vorliegende Erfindung betrifft einen Linearantrieb mit einer drehbar angetriebenen Gewindespindel, einer drehfest geführten Spindelmutter, die durch die Gewindespindel in eine Längsrichtung bewegbar ist, einem sich in Längsrichtung erstreckenden Profil und mindestens einem Stützelement zur Abstützung der Gewindespindel gegen eine Bewegung senkrecht zur Längsrichtung.

Die DE 38 04 117 offenbart eine mechanische Lineareinheit mit einer drehbar gelagerten Gewindespindel, mittels der eine drehfest angeordnete Spindelmutter antreibbar ist. Ferner sind ringförmige Abstützelemente vorgesehen, die zeitweilig mit der Spindelmutter mitschleppbar sind und die Gewindespindel abstützen. Die Abstützelemente weisen dabei federnde Rastmittel auf, damit sie in vorbestimmten Abständen entlang einer Führungsbahn verrastet werden können. Durch das Verrasten können die Abstützelemente zwar positioniert werden, allerdings trägt die Rastverbindung nicht zur Stabilität der Abstützelemente in eine Richtung senkrecht zur Längsrichtung bei.

Die DE 100 02 849 offenbart eine Lineareinheit, bei der ein Rastelement zum Verrasten eines Grundkörpers an einem Profil vorgesehen ist, um eine Verstellsicherung für den Grundkörper bereitzustellen. Die Haltekräfte durch das Rastelement sind ebenfalls begrenzt.

Auch die DE 196 36 272 offenbart eine Linearführungseinrichtung, bei der eine Mutter linear an einem Profil geführt ist. Ein Klemmmechanismus zur Fixierung eines Stützelementes ist nicht vorgesehen.

Die DE 10 2008 012 842 zeigt einen Spindelantrieb mit Stützelementen, die an Nuten eines Profils geführt sind. Die Stützelemente werden allerdings nicht über einen Klemmmechanismus an einer Schiene festgelegt.

Die EP 2 584 223 offenbart einen Linearantrieb, bei dem eine Spindelmutter entlang einem Profil verfahrbar ist. An der Spindelmutter ist dabei eine Gleitführung vorgesehen, bei der durch eine Feder vorgespannte Gleitelemente vorhanden sind. Ein weiterer Linearantrieb ist in der nachveröffentlichten EP 2 584 223 A1 offenbart. Das Stützelement weist einen Klemmmechanismus auf, mittels dem das Stützelement kraftschlüssig festlegbar ist.

Es ist daher Aufgabe der vorliegenden Erfindung, einen Linearantrieb zu schaffen, der eine stabile Abstützung der Gewindespindel durch mindestens ein Stützelement gewährleistet.

Diese Aufgabe wird mit einem Linearantrieb mit den Merkmalen des Anspruches 1 gelöst.

Erfindungsgemäß weist das mindestens eine Stützelement einen Klemmmechanismus auf, mittels dem das Stützelement kraftschlüssig festlegbar ist. Dadurch wird das Stützelement an einer vorbestimmten Position kraftschlüssig fixiert und kann eine besonders stabile Abstützung der Gewindespindel gewährleisten.

Vorzugsweise klemmt der Klemmmechanismus das Stützelement an dem Profil oder einem an dem Profil festgelegten Bauteil fest. Für die Abstützung der Gewindespindel ist es lediglich notwendig, dass der Klemmmechanismus das Stützelement in der vorbestimmten Position kraftschlüssig fixiert, wobei sowohl ein Festklemmen an dem Profil als auch an einem weiteren Bauteil, beispielsweise einer an dem Profil festgelegten Schiene, möglich ist.

Vorzugsweise weist der Klemmmechanismus ein bewegbares Klemmelement auf, das durch eine Feder in eine klemmende Position vorgespannt ist. Das Klemmelement kann dabei eine Anlaufschräge aufweisen, die an dem Stützelement abgestützt ist und das Klemmelement in eine Richtung senkrecht zur Längsrichtung der Gewindespindel vorspannt. Durch Bewegen des Klemmelementes kann dieses für eine kraftschlüssige Festlegung des Stützelementes sorgen und bei Bedarf wieder entriegelt werden.

Für eine besonders stabile Abstützung wird das Klemmelement an einer an dem Profil festgelegten Schiene festgeklemmt, die vorzugsweise als Stahlschiene ausgebildet ist. Dadurch wird die Stabilität weiter erhöht, da das Stützelement an der Stahlschiene besonders stabil festgelegt ist, so dass Bewegungen des Profils, das beispielsweise als extrudiertes Aluminiumprofil ausgebildet ist, die Klemmkräfte nicht nachteilig beeinflussen können.

Der Klemmmechanismus wird beim Koppeln zweier benachbarter Stützelemente oder beim Koppeln eines Stützelementes mit der Spindelmutter entriegelt. Beim Lösen der Kopplung des Stützelementes von einem benachbarten Stützelement oder der Spindelmutter kann dann der Klemmmechanismus aktiviert werden, beispielsweise durch Bewegen eines Klemmelementes in Längsrichtung.

Vorzugsweise sind auf beiden Seiten der Spindelmutter mehrere Stützelemente vorgesehen, die mit der Spindelmutter oder einem an der Spindelmutter fixierten Stützelement koppelbar sind und dann zusammen mit der Spindelmutter bewegt werden. In einer vorbestimmten Position der Spindelmutter oder einem an der Spindelmutter fixierten Stützelement sind dann einzelne Stützelemente entkoppelbar und werden über den Klemmmechanismus fixiert. Dabei kann jedes Stützelement einen Anschlag aufweisen, der mit einem am Profil vorgesehen Stopper zusammenwirkt, um das Stützelement in einer vorbestimmten Position in Längsrichtung der Gewindespindel anzuhalten. Die Anzahl der Stützelemente auf jeder Seite der Spindelmutter ist dabei abhängig von der Länge der Gewindespindel.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines erfindungsgemäßen Linearantriebes mit mehreren Detailansichten;
- Figur 2: eine teilweise geschnittene Seitenansicht des Linearantriebes der Figur 1;
- Figuren 2A bis 2F: mehrere Schnittansichten an unterschiedlichen Positionen des Linearantriebes der Figur 2;
- Figur 3: eine perspektivische Explosionsdarstellung eines Stützelementes des Linearantriebes der Figur 1;
- Figuren 4A bis 4D: mehrere Ansichten des zusammengebauten Stützelementes der Figur 3; und
- Figur 5: eine Ansicht verschiedener Platten für die Stützelemente des Linearantriebes.

Ein Linearantrieb 1 umfasst eine drehbar angetriebene Gewindespindel 2, die innerhalb eines im Querschnitt im Wesentlichen U-förmigen Profils 3 angeordnet ist. An der Gewindespindel 2 ist ein Schlitten 4 verfahrbar gelagert, der an einer drehfesten Spindelmutter 5 gehalten ist. Die Gewindespindel 2 kann für einen Kugelgewindetrieb eingesetzt werden oder ein anderes Gewinde aufweisen, beispielsweise ein Trapezgewinde.

An dem Profil 3 ist eine Schiene 6 festgelegt, die zur Führung der Spindelmutter 5 dient. Das Profil 3 ist endseitig mit einem ersten Lager 7 und an der gegenüberliegenden Seite über ein zweites Lager 9 für die Gewindespindel 2 verschlossen. An dem ersten Lager 7 steht ein Zapfen 8 der Gewindespindel 2 hervor, der mit einem nicht dargestellten Antrieb gekoppelt sein kann, um die Gewindespindel 2 anzutreiben.

Der Linearantrieb 1 kann in einer größeren Länge von beispielsweise 2 m bis 10 m hergestellt werden, wobei je nach Länge eine Abstützung der Gewindespindel 2 vorgenommen wird. Hierfür sind um die Gewindespindel 2 mehrere Stützelemente 10, 11, 12, 13 und 14 vorgesehen, die jeweils an der Schiene 6 geführt sind. Die Stützelemente 10, 11, 12, 13, 14 sind jeweils an vorbestimmten Zwischenpositionen an dem Profil 3 positioniert, um in gewissen Abständen die Gewindespindel 2 gegen eine Bewegung senkrecht zur Längsrichtung abzustützen. Auf der zu dem Schlitten 4 gegenüberliegenden Seite sind weitere Stützelemente 10', 11', 12', 13' und 14' vorgesehen, die an dem Schlitten 4 gehalten sind und zwischen dem Ende des Profils 3 benachbart zu dem Lager 9 und dem Schlitten 4 angeordnet sind.

Die Schiene 6 besitzt eine höhere Festigkeit als das Profil 3, das als extrudiertes Aluminiumprofil hergestellt sein kann. Die Schiene 6 kann als Stahlprofil ausgebildet sein, das einen im Wesentlichen rechteckigen Querschnitt mit einem verbreiterten Kopfabschnitt 36, einem schmaleren Mittelabschnitt 37 und einem verbreiterten Fußabschnitt 38 aufweist. Der Fußabschnitt 38 ist an dem Profil 3 festgelegt. Das Profil 3 ist im Querschnitt im Wesentlichen U-förmig ausgebildet und weist zwei Schenkel 30 auf, innerhalb derer die Gewindespindel 2 angeordnet ist. Die Schenkel 30 sind über einen bodenseitigen Abschnitt 31 miteinander verbunden, an dem die Schiene 6 fixiert ist. Durch die Ausbildung eines verdickten Kopfabschnittes 36 können die Spindelmutter 5 sowie die Stützelemente 10 bis 14 der Kopfabschnitt 36 U-förmig umgreifen, so dass ein Abheben der Stützelemente 10 bis 14 sowie der Spindelmutter 5 verhindert wird und eine Führung bereitgestellt wird, die lediglich eine Bewegung in Längsrichtung der Schiene 6 zulässt.

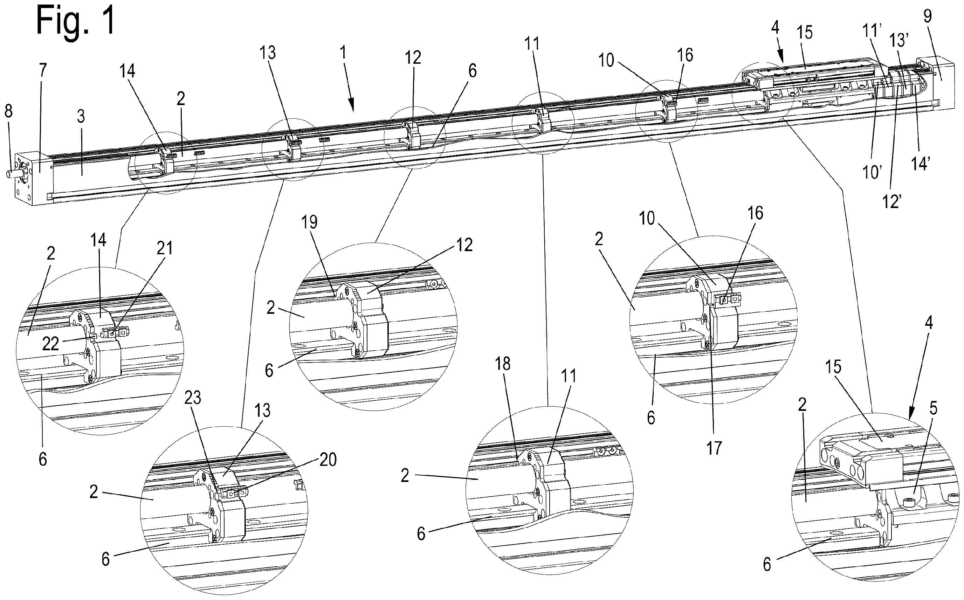

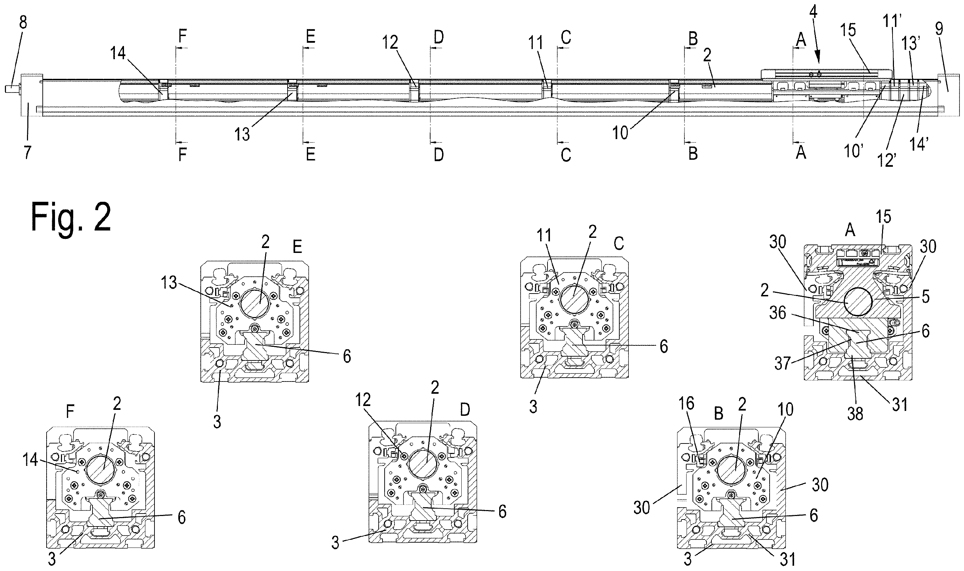

Um die Stützelemente 10, 11, 12, 13, 14 an vorbestimmten Positionen des Profils 3 zu positionieren, weisen diese Anschläge auf. So weist das Stützelement 10 einen Anschlag 17 auf, der mit einem Stopper 16 zusammenwirkt, der an einem Schenkel 30 des Profils 3 montiert ist. Auf ähnliche Weise weist das Stützelement 11 einen Anschlag 18 und das Stützelement 12 einen Anschlag 19 auf, die an unterschiedlichen Positionen angeordnet sind, damit jedes Stützelement 10, 11, 12, 13, 14 mit einem vorbestimmten Stopper an dem Profil 3 zusammenwirkt. Das Stützelement 13 weist einen Anschlag 23 auf, der mit einem Stopper 20 zusammenwirkt, der an dem Profil 3 festgelegt ist. In Querschnittsansicht benachbart hierzu ist ein Anschlag 22 an dem Stützelement 14 vorgesehen, der mit einem Stopper 21 zusammenwirkt. Verfährt der Schlitten 4 mit der Spindelmutter 5 nun von einer in den Figuren 1 und 2 gezeigten Position auf der linken Seite nach rechts, gelangt zunächst der Anschlag 22 in Kontakt mit dem Stopper 21, so dass das Stützelement 14 an dieser Position angehalten wird und die Spindelmutter 5 mit dem Schlitten 4 mit den weiteren Stützelementen 10 bis 13 weiter nach rechts verfahren werden kann. Nachfolgend werden dann die Stützelemente 13, 12, 11 und 10 an den vorbestimmten Positionen angehalten, bis die in den Figuren 1 und 2 gezeigte Endposition erreicht ist. In dieser Position wird die Gewindespindel 2 durch die Stützelemente 10 bis 14 in eine Richtung senkrecht zur Längsrichtung abgestützt.

Wird die Gewindespindel 2 nun in eine gegenläufige Richtung angetrieben, bewegt sich die Spindelmutter 5 mit dem Schlitten 4 nach links. Dann werden die Stützelemente 10 bis 14 an der Spindelmutter 5 bzw. dem Schlitten 4 eingesammelt, während die Stützelemente 10', 11', 12', 13' und 14' an vorbestimmten Stoppern an dem Profil 3 angehalten werden, um dann die Gewindespindel 2 abzustützen.

Die Stützelemente 10 bis 14 einerseits und 10' bis 14' andererseits sind aneinander über Magnetkräfte gehalten, wobei die Haltekräfte der Magneten von der Spindelmutter 5 hin abnehmen. Die äußeren Stützelemente 14 und 14' sind somit leichter von den benachbarten Stützelementen 13 bzw. 13' zu lösen, als die Stützelemente 13 und 13' von den weiter innen liegenden Stützelemente 12 und 12'. Auf diese Weise wird verhindert, dass an einem Stopper versehentlich mehrere Stützelemente 10 bis 14 und 10' bis 14' angehalten werden.

An der Spindelmutter 5 ist ein Schlitten 4 festgelegt, der eine Plattform 15 aufweist, an der beliebige Bauteile fixiert werden können, die über den Linearantrieb 1 verfahren werden sollen.

Wie in den Figuren 2A bis 2F gezeigt ist, umgreifen sowohl die Spindelmutter 5 als auch die Stützelemente 10 bis 14 den oberen Kopfabschnitt 36 der Schiene 6 U-förmig. Die Schiene 6 besitzt dabei einen ähnlich großen Querschnitt wie die Gewindespindel 2, so dass eine stabile Abstützung der Stützelemente 10 bis 14 an der Schiene 6 gewährleistet ist. Die Schiene 6 kann über Schraubverbindungen oder andere Befestigungsmittel an dem bodenseitigen Abschnitt 31 des Profils 3 festgelegt sein.

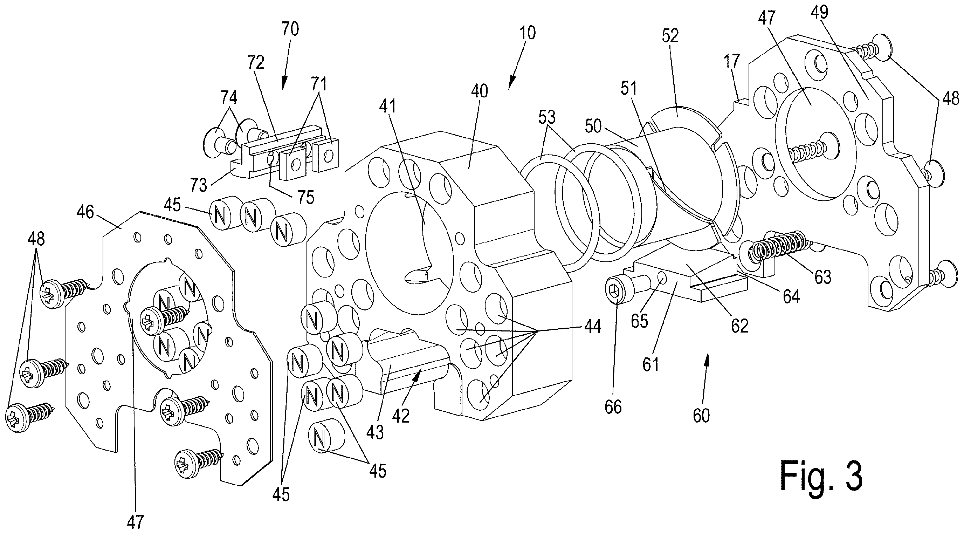

In Figur 3 ist ein Stützelement 10 im Detail gezeigt, wobei die anderen Stützelemente 11 bis 14 und 10' bis 14' ähnlich aufgebaut sind, lediglich die Position des jeweiligen Anschlages 17 variiert. Zudem ist die Anzahl der Magnete 45 an den Stützelementen 11 bis 14 bzw. 10' bis 14' unterschiedlich.

Das Stützelement 10 umfasst einen mittleren Stützkörper 40, in dem eine kreisförmige Durchführung für die Gewindespindel 2 ausgespart ist. Der Stützkörper 40 umfasst eine U-förmige Aufnahme 42, die auf den verbreiterten Kopfabschnitt 36 der Schiene 6 aufschiebbar ist. An der U-förmigen Aufnahme 42 sind nach innen gerichtete Stege mit Führungsflächen 43 ausgebildet, die den verbreiterten Kopfabschnitt 36 hintergreifen.

In dem Stützkörper 40 ist ferner eine Vielzahl von Aussparungen 44 ausgebildet, die zur Aufnahme jeweils eines Magneten 45 dienen. Die Anzahl der Magnete 45, die in die Aussparungen 44 eingefügt werden, bestimmt die Haltekräfte zwischen dem Stützelement 10 und einem benachbarten Stützelement 11. Die Stützelemente, die näher an der Spindelmutter 5 angeordnet sind, weisen mehr Magnete 45 auf als weiter außen liegende Stützelemente, so dass die Haltekräfte zwischen zwei Stützelementen von der Spindelmutter weg abnehmen. Die Aussparungen 44 des Stützkörpers 40 sind durch eine Platte 46 verschlossen, die für die Magnetkräfte durchlässig ist, beispielsweise aus Aluminium besteht, und ein Herausfallen der Magnete 45 verhindert. Die Platte 46 weist ebenfalls eine Durchführungen 47 für die Gewindespindel 2 auf, wobei die Platte 46 über mehrere Schrauben 48 an dem Stützkörper 40 fixiert ist.

Auf der zu der Platte 46 gegenüberliegenden Seite ist eine weitere Platte 49 vorgesehen, die über Schrauben 48 an dem Stützkörper 40 festgelegt ist. Die Platte 49 besteht aus Metall und kann an Magneten eines benachbarten Stützelementes oder der Spindelmutter 5 durch Magnetkräfte fixiert werden.

An dem mittleren Stützkörper 40 ist in der Durchführung 41 eine Buchse 50 eingesetzt, die geschlitzt ausgebildet ist und mit einer Vorspannung gegen die äußeren Umfang der Gewindespindel 2 gedrückt wird. Hierfür sind um die Buchse 50 elastische O-Ringe 53 vorgesehen, die am äußeren Umfang an der Durchführung 41 des Stützkörpers 40 anliegen und an der Innenseite die Buchse 50 elastisch gegen die Gewindespindel 2 vorspannen. Die Buchse 50 weist einen radial hervorstehenden Kragen 52 auf, der zwischen der Platte 49 und einer Stirnseite des Stützkörpers 40 angeordnet ist, so dass die Buchse 50 in axiale Richtung nicht verrutschen kann. Benachbart zu den O-Ringen 53 kann ein elastisches Dichtmittel eingespritzt sein, um die Dämpfung noch weiter zu verbessern, was zu geringeren Vibrationen an der Gewindespindel 2 und zu weniger Geräuschentwicklung führt.

Zur Festlegung des Stützelementes 10 an der Schiene 6 ist ein Klemmmechanismus 60 vorgesehen, der ein Klemmelement 61 aufweist, das eine zur Längsrichtung der Schiene 6 geneigte Anlaufschräge 62 umfasst. Das Klemmelement 61 ist durch eine Feder 63 in Längsrichtung vorgespannt. Die Feder 63 ist dabei zwischen der Platte 49 und einer Stirnseite 64 an dem Mitnehmerelement 61 abgestützt. Auf der zur Feder 63 gegenüberliegenden Seite ist eine Schraube 66 in eine Gewindebohrung 65 an dem Klemmelement 61 eingedreht, die über die Platte 46 hervorsteht, wobei die Überstand einstellbar ist.

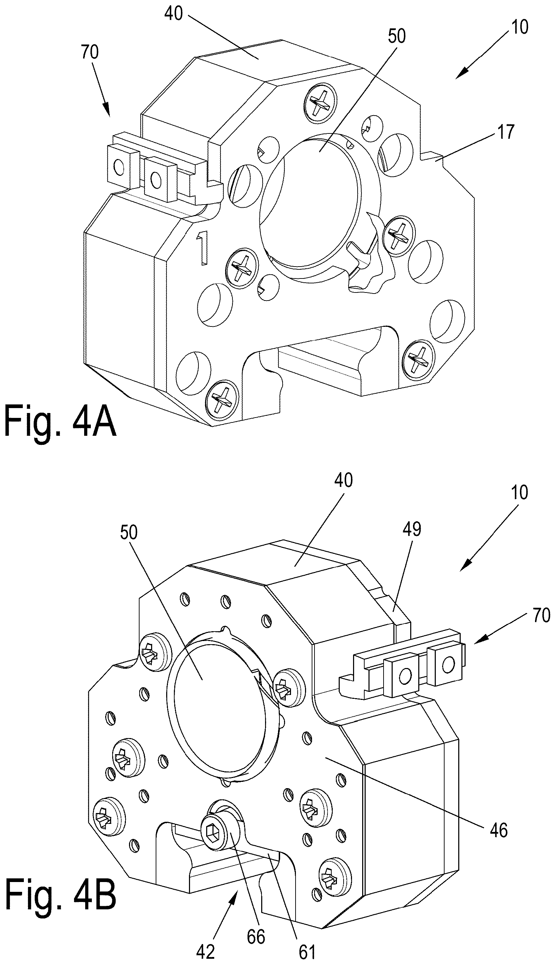

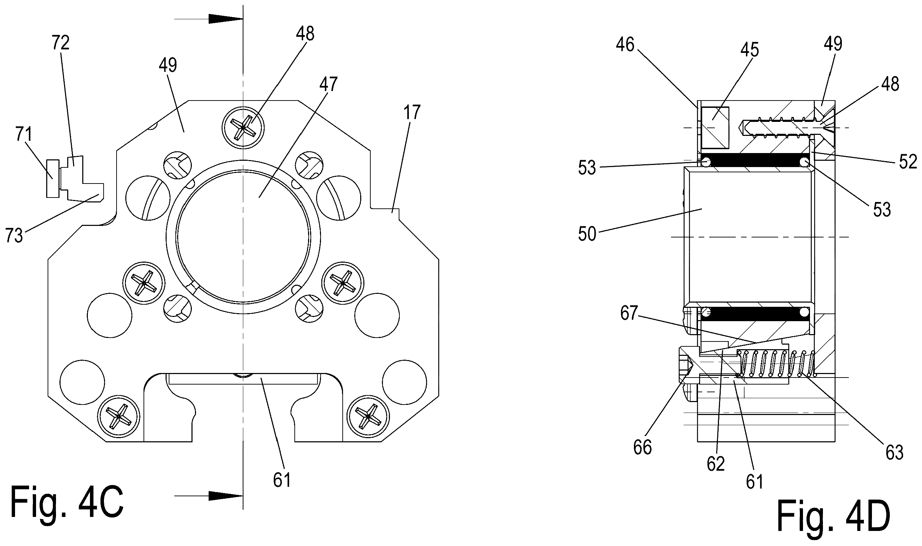

In den Figuren 4A bis 4D ist das Stützelement 10 in einer zusammengebauten Position dargestellt. Der Klemmmechanismus 60 ist oberhalb der Aufnahme 42 zum Aufnehmen des Kopfabschnittes 36 der Schiene 6 angeordnet. Die Schraube 66 steht dabei in Längsrichtung der Schiene 6 über die Platte 46 hervor und kann in Längsrichtung gegen die Kraft der Feder 63 eingedrückt werden. Die Schraube 66 dient dabei auch der Tiefeneinstellung für das Klemmelement 61.

Die Anlaufschräge 62 des Klemmelementes 61 wirkt mit einer Schräge 67 des Stützkörpers 40 zusammen, wobei durch die Kraft der Feder 63 das Klemmelement 61 gegen die Schräge 67 gedrückt wird, so dass durch die Kraft der Feder 63 das Klemmelement 61 nach unten gegen die Schiene 6 gedrückt wird. Dadurch kann das Stützelement 10 klemmend an der Schiene 6 fixiert werden.

Soll das Stützelement 10 nun aus der angeklemmten Position an der Schiene 6 verfahren werden, wird der Klemmmechanismus 60 entriegelt. Hierfür wird die Spindelmutter 5 oder der Schlitten 4 zu dem Stützelement 10 verfahren, wobei eine Anschlagfläche zuerst auf die Schraube 66 auftrifft, bevor ein Kontakt zwischen der Platte 46 und dem Schlitten 4 oder der Spindelmutter 5 erfolgt. Dadurch wird die Schraube 66 gegen die Kraft der Feder 63 eingedrückt und bewegt somit das Klemmelement 61 in Richtung der Platte 49. Dadurch werden die auf die Schiene 6 wirkenden Klemmkräfte aufgehoben, da das Klemmelement 61 nicht mehr durch die Anlaufschräge 62 und die Schräge 67 gegen die Schiene 6 vorgespannt ist.

Die durch die Magnete 45 aufgebrachten Haltekräfte zu der Spindelmutter 5 oder dem Schlitten 4 bzw. zu einem benachbarten Stützelement 11 bis 14 sind dabei größer als die Kraft der Feder 63, so dass ein versehentliches Lösen aus der gekoppelten Position durch die Feder 63 verhindert wird.

Das Stützelement 10 kann nach der Entriegelung des Klemmmechanismus 60 entlang der Schiene 6 leichtgängig verfahren werden, wobei der Stützkörper 40 für eine Führung entlang der Schiene 6 sorgt und der Klemmmechanismus 60 außer Eingriff ist. Wird nun das Stützelement 10 an dem Stopper 16 an dem Profil 3 angehalten und die Spindelmutter 5 mit dem Schlitten 4 bewegt sich weg von dem Stützelement 10, wird die Schraube 66 freigegeben und der Klemmmechanismus 60 wird durch den Druck der Feder 63 aktiviert und klemmt durch die Schräge 67 und die Anlaufschräge 62 das Klemmelement 61 wieder gegen die Schiene 6.

Die anderen Stützelemente 11 bis 14 sind wie das Stützelement 10 aufgebaut, bis auf die Position des Anschlages 17 und die Anzahl der Magneten 45. Im Übrigen wird hinsichtlich der Ausgestaltung der Stützelemente 11 bis 14 und 10' bis 14' auf obige Ausführungen verwiesen.

In den Figuren 3 und 4A bis 4D ist ferner noch ein Stopper 70 gezeigt, der an einer Nut des Profils 3 festlegbar ist. Der Stopper 70 umfasst zwei Nutensteine 71, die in eine entsprechende Nut an den Schenkeln 30 des Profils 3 einfügbar sind. Die Nutensteine 71 sind über Schrauben 74 mit einer Leiste 72 verbunden, die einen hervorstehenden Schenkel 73 umfasst, der als Anschlagsfläche dient. In der Leiste 72 sind Öffnungen 75 zum Durchführen der Schrauben 74 vorgesehen, so dass über die Schrauben 74 die Leiste 72 an der gewünschten Zwischenposition des Profils 3 festgelegt werden kann. Dadurch wird der Stopper 70 an dem Profil 3 festgelegt und definiert eine Anschlagsposition für eines der Stützelemente 10 bis 14 oder 10' bis 14'. Es ist natürlich auch möglich, dass ein Stopper 70 für zwei Stützelemente 10 bis 14 oder 10' bis 14' jeweils einen Anschlag definiert, und zwar für Stützelemente, die sich an gegenüberliegenden Seiten der Spindelmutter 5 befinden. Über die Länge des Profils 3 verteilt sind eine Vielzahl solcher Stopper 70 montiert, die jeweils einen Anschlag für eines der Stützelemente 10 bis 14 oder 10' bis 14' definiert. Dabei dürfen sich die am Profil 3 fixierten Stopper 70 gegenseitig nicht behindern, weshalb eine Anschlagsfläche des Stoppers 70 in Querschnittsansicht an unterschiedlichen Positionen angeordnet wird.

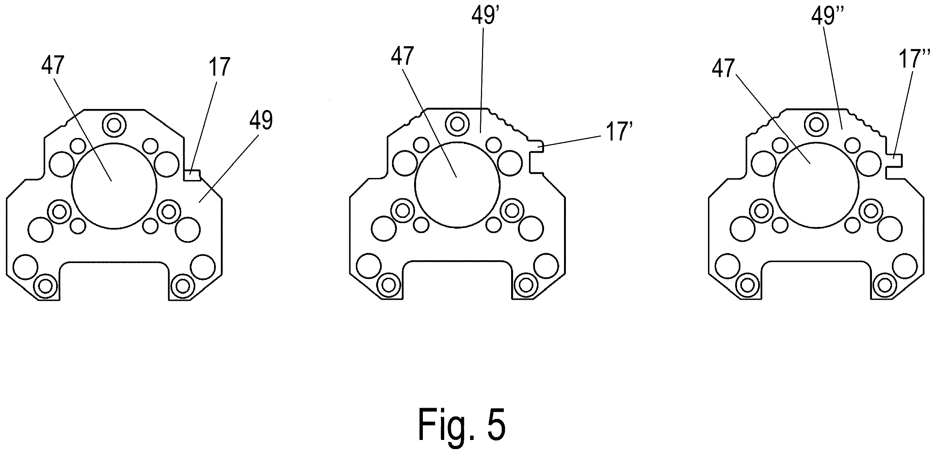

In Figur 5 sind Platten 49, 49' und 49" gezeigt, die an unterschiedlichen Stützelementen 10 bis 14 oder 10' bis 14' fixiert werden. Die Platte 49 des Stützelementes 10 weist den Anschlag 17 auf, während die Platte 49' den Anschlag 17' und die Platte 49" den Anschlag 17" aufweist. Die Platten 49, 49' und 49" können dabei mir der Oberseite oder der Unterseite an einem Stützkörper 40 montiert werden, so dass die Anschläge 17, 17', 17" in einer Querschnittsansicht der Gewindespindel 2 an unterschiedlichen Positionen angeordnet sind, wobei mit den drei Platten 49, 49' und 49" bei beidseitiger Montage sechs Anschlagspositionen definiert werden können.

In dem dargestellten Ausführungsbeispiel ist das Profil 3 im Querschnitt U-förmig ausgebildet. Es ist natürlich möglich, den Linearantrieb 1 auch mit einem Profil 3 mit einem anderen Querschnitt herzustellen. Zudem kann der Querschnitt der Schiene 6 ebenfalls variiert werden, um eine stabile lineare Führung der Spindelmutter 5 und der Stützelemente 10 bis 14 und 10' bis 14' zu ermöglichen. Die Führung der Stützelemente 10 bis 14 und 10' bis 14' sowie der Spindelmutter 5 kann als Gleitführung ausgebildet sein, aber es können auch Wälzkörper vorgesehen werden, um die Führung noch leichtgängiger zu machen.

Die Stützelemente 10 bis 14 und 10' bis 14' können zudem mit Dämpfungsmittel ausgestattet sein, um laute Anschlaggeräusche zu vermeiden. Insbesondere beim schnellen Verfahren des Schlittens 4 können die Stützelemente 10 bis 14 und 10' bis 14' mit höherer Geschwindigkeit aufeinandertreffen, so dass an den Kontaktflächen elastische Elemente, beispielsweise Gummidämpfer oder andere elastische Bauteile vorgesehen werden können, um die Geräusche zu vermindern. Zudem kann zumindest eine der Platten 46 und/oder 49 mit einer elastischen Beschichtung versehen sein.

### Bezugszeichenliste

- 1: Linearantrieb
- 2: Gewindespindel
- 3: Profil
- 4: Schlitten
- 5: Spindelmutter
- 6: Schiene
- 7: Lager
- 8: Zapfen
- 9: Lager
- 10, 10': Stützelement
- 11, 11': Stützelement
- 12, 12': Stützelement
- 13, 13': Stützelement
- 14, 14': Stützelement
- 15: Plattform
- 16: Stopper
- 17: Anschlag
- 18: Anschlag
- 19: Anschlag
- 20: Stopper
- 21: Stopper
- 22: Anschlag
- 23: Anschlag
- 30: Schenkel
- 31: Abschnitt
- 36: Kopfabschnitt
- 37: Mittelabschnitt
- 38: Fußabschnitt
- 40: Stützkörper
- 41: Durchführung
- 42: Aufnahme
- 43: Führungsfläche
- 44: Aussparung
- 45: Magnet
- 46: Platte
- 47: Durchführung
- 48: Schraube
- 49: Platte
- 50: Buchse
- 52: Kragen
- 53: O-Ring
- 60: Klemmmechanismus
- 61: Klemmelement/Mitnehmerelement
- 62: Anlaufschräge
- 63: Feder
- 64: Stirnseite
- 65: Gewindebohrung
- 66: Schraube
- 67: Schräge
- 70: Stopper
- 71: Nutenstein
- 72: Leiste
- 73: Schenkel
- 74: Schraube
- 75: Öffnung

## Patentansprüche

1. Linearantrieb (1), umfassend:
a) eine drehbar angetriebene Gewindespindel (2);
b) eine drehfest geführte Spindelmutter (5), die durch die Gewindespindel (2) in eine Längsrichtung bewegbar ist;
c) ein sich in Längsrichtung erstreckendes Profil (3);
d) mindestens ein Stützelement (10-14; 10'-14') zur Abstützung der Gewindespindel (2) gegen eine Bewegung senkrecht zur Längsrichtung wobei das mindestens eine Stützelement (10 14; 10-14') eine Aufnahme (42) aufweist, die eine an dem Profil (3) festgelegte Schiene (6) U-förmig umgreift, **dadurch gekennzeichnet, dass** das mindestens eine Stützelement (10-14; 10'-14') einen Klemmmechanismus (60) aufweist, mittels dem das Stützelement (10-14; 10'-14') kraftschlüssig festlegbar ist, und der Klemmmechanismus (60) beim Koppeln zweier benachbarter Stützelemente (10-14; 10'-14') oder mit der Spindelmutter (2) entriegelt wird und beim Lösen der Kopplung des Stützelementes (10-14; 10'-14') von dem benachbarten Stützelement (10-14; 10'-14') oder der Spindelmutter (5) der Klemmmechanismus (60) aktiviert wird.

2. Linearantrieb nach Anspruch 1, **dadurch gekennzeichnet, dass** der Klemmmechanismus (60) das Stützelement (10-14; 10'-14') an dem Profil (3) oder einem an dem Profil (3) festgelegten Bauteil (6) kraftschlüssig festklemmt.

3. Linearantrieb nach Anspruch 1 oder 2, **dadurch gekennzeichnet, dass** der Klemmmechanismus (60) ein bewegbares Klemmelement (61) umfasst, das durch eine Feder (63) in eine klemmende Position vorgespannt ist.

4. Linearantrieb nach Anspruch 3, **dadurch gekennzeichnet, dass** das Klemmelement (61) eine Anlaufschräge (62) aufweist, die an dem Stützelement (10-14; 10'-14') abgestützt ist und das Klemmelement (61) in eine Richtung senkrecht zur Längsrichtung der Gewindespindel (2) vorspannt.

5. Linearantrieb nach einem der vorhergehenden Ansprüche, **dadurch gekennzeichnet, dass** über den Klemmmechanismus (60) das Stützelement (10-14; 10'-14') an einer an dem Profil (3) festgelegten Schiene (6) anklemmbar ist.

6. Linearantrieb nach Anspruch 5, **dadurch gekennzeichnet, dass** die Schiene (6) als Stahlschiene ausgebildet ist.

7. Linearantrieb nach einem der vorhergehenden Ansprüche, **dadurch gekennzeichnet, dass** auf beiden Seiten der Spindelmutter (5) mehrere Stützelemente (10-14; 10'-14') vorgesehen sind, die mit der Spindelmutter (5) oder einem an der Spindelmutter (5) fixierten Stützelement (10-14; 10'-14') koppelbar sind und in einer vorbestimmten Position von der Spindelmutter (5) oder einem an der Spindelmutter (5) fixierten Stützelement (10-14; 10'-14') entkoppeltbar sind, um die Gewindespindel (2) abzustützen.

8. Linearantrieb nach einem der vorhergehenden Ansprüche, **dadurch gekennzeichnet, dass** jedes Stützelement (10-14; 10'-14') einen Anschlag (17, 18, 19, 22) aufweist, der mit einem am Profil (3) vorgesehenen Stopper (16, 20, 21, 70) zusammenwirkt, um das Stützelement (10-14; 10'-14') in einer vorbestimmten Position in Längsrichtung der Gewindespindel (2) an der Schiene (6) oder dem Profil (3) zu fixieren.

9. Linearantrieb nach einem der vorhergehenden Ansprüche, **dadurch gekennzeichnet, dass** der Klemmmechanismus (60) benachbart zu der Aufnahme (42) angeordnet ist und ein Klemmelement (61) gegen die Schiene (6) anklemmbar ist.

10. Linearantrieb nach einem der vorhergehenden Ansprüche, **dadurch gekennzeichnet, dass** das mindestens eine Stützelement (10-14; 10'-14') einen mittleren Stützkörper (40) aufweist, an dessen gegenüberliegenden Seiten jeweils eine Platte (46, 49) festgelegt ist.

11. Linearantrieb nach Anspruch 10, **dadurch gekennzeichnet, dass** integral mit einer Platte (49, 49', 49") ein Anschlag (17, 17', 17") ausgebildet ist.

## Claims

1. Linear drive (1) comprising:
a) a rotatably driven threaded spindle (2);
b) a non-rotatably guided spindle nut (5) which can be moved in a longitudinal direction by the threaded spindle (2);
c) a longitudinally extending profile (3);
d) at least one support element (10-14; 10'-14') for supporting the threaded spindle (2) against movement perpendicular to the longitudinal direction, the at least one support element (10 14; 10-14') having a receptacle (42) which engages in a U-shape around a rail (6) fixed to the profile (3),
**characterized in that**
the at least one support element (10-14; 10'-14') has a clamping mechanism (60) by means of which the support element (10-14; 10'-14') can be fixed in a force-locking manner, and the clamping mechanism (60) is unlocked during coupling of two adjacent support elements (10-14; 10'-14') or with the spindle nut (2), and the clamping mechanism (60) is activated during the release of the coupling of the support element (10-14; 10'-14') from the adjacent support element (10-14; 10'-14') or the spindle nut (5).

2. Linear drive according to claim 1, **characterized in that** the clamping mechanism (60) frictionally clamps the support element (10-14; 10'-14') to the profile (3) or to a component (6) fixed to the profile (3).

3. Linear drive according to claim 1 or 2, **characterized in that** the clamping mechanism (60) comprises a movable clamping element (61) which is pretensioned into a clamping position by a spring (63).

4. Linear drive according to claim 3, **characterized in that** the clamping element (61) has a run-on slope (62) which is supported on the support element (10-14; 10'-14') and pretensions the clamping element (61) in a direction perpendicular to the longitudinal direction of the threaded spindle (2).

5. Linear drive according to one of the preceding claims, **characterized in that** the support element (10-14; 10'-14') can be clamped to a rail (6) fixed to the profile (3) via the clamping mechanism (60).

6. Linear drive according to claim 5, **characterized in that** the rail (6) is designed as a steel rail.

7. Linear drive according to one of the preceding claims, **characterized in that** a plurality of support elements (10-14; 10'-14') are provided on both sides of the spindle nut (5), which support elements are connected to the spindle nut (5) or to a support element (10-14; 10'-14') fixed to the spindle nut (5) and can be decoupled in a predetermined position from the spindle nut (5) or a support element (10-14; 10'-14') fixed to the spindle nut (5) to support the threaded spindle (2).

8. Linear drive according to one of the preceding claims, **characterized in that** each support element (10-14; 10'-14') comprises a stop (17, 18, 19, 22) cooperating with a stopper (16, 20, 21, 70) provided on the profile (3) to fix the support element (10-14; 10'-14') in a predetermined position in the longitudinal direction of the threaded spindle (2) on the rail (6) or the profile (3).

9. Linear drive according to one of the preceding claims, **characterized in that** the clamping mechanism (60) is arranged adjacent to the receptacle (42) and a clamping element (61) can be clamped against the rail (6).

10. Linear drive according to one of the preceding claims, **characterized in that** the at least one support element (10-14; 10'-14') has a central support body (40), on the opposite sides of which a respective plate (46, 49) is fixed in each case.

11. Linear drive according to claim 10, **characterized in that** a stop (17, 17', 17") is integrally formed with a plate (49, 49', 49").

## Revendications

1. Entraînement linéaire (1) comprenant :
a) une broche filetée (2) entraînée en rotation ;
b) un écrou de broche (5) guidé de manière bloquée en rotation qui peut être déplacé dans une direction longitudinale par la broche filetée (2) ;
c) un profilé (3) s'étendant dans la direction longitudinale ;
d) au moins un élément de support (10-14 ; 10'-14') pour supporter la broche filetée (2) contre un mouvement perpendiculaire à la direction longitudinale, ledit au moins un élément de support (10-14 ; 10-14') présentant un logement (42) qui enserre en forme de U un rail (6) fixé au profilé (3),
**caractérisé en ce que** ledit au moins un élément de support (10-14 ; 10'-14') présente un mécanisme de serrage (60) au moyen duquel l'élément de support (10-14 ; 10'-14') peut être fixé par force et le mécanisme de serrage (60) est déverrouillé lors de l'accouplement de deux éléments de support voisins (10-14 ; 10'-14') ou avec l'écrou de broche (2) et le mécanisme de serrage (60) est activé lors de la libération de l'accouplement de l'élément de support (10-14 ; 10'-14') de l'élément de support voisin (10-14 ; 10'-14') ou de l'écrou de broche (5).

2. Entraînement linéaire selon la revendication 1, **caractérisé en ce que** le mécanisme de serrage (60) serre par force l'élément de support (10-14 ; 10'-14') sur le profilé (3) ou sur un élément (6) fixé au profilé (3).

3. Entraînement linéaire selon la revendication 1 ou 2, **caractérisé en ce que** le mécanisme de serrage (60) comprend un élément de serrage mobile (61) qui est précontraint dans une position de serrage par un ressort (63).

4. Entraînement linéaire selon la revendication 3, **caractérisé en ce que** l'élément de serrage (61) présente une rampe (62) qui est appuyée sur l'élément de support (10-14 ; 10'-14') et précontraint l'élément de serrage (61) dans une direction perpendiculaire à la direction longitudinale de la broche filetée (2).

5. Entraînement linéaire selon l'une des revendications précédentes, **caractérisé en ce que** l'élément de support (10-14 ; 10'-14') peut être serré sur un rail (6) fixé au profilé (3) par le mécanisme de serrage (60).

6. Entraînement linéaire selon la revendication 5, **caractérisé en ce que** le rail (6) est réalisé sous la forme d'un rail en acier.

7. Entraînement linéaire selon l'une des revendications précédentes, **caractérisé en ce que** plusieurs éléments de support (10-14 ; 10'-14') sont prévus des deux côtés de l'écrou de broche (5), lesquels peuvent être accouplés à l'écrou de broche (5) ou à un élément de support (10-14 ; 10'-14') fixé à l'écrou de broche (5) et peuvent être désaccouplés dans une position prédéterminée de l'écrou de broche (5) ou d'un élément de support (10-14 ; 10'-14') fixé à l'écrou de broche (5) pour supporter la broche filetée (2).

8. Entraînement linéaire selon l'une des revendications précédentes, **caractérisé en ce que** chaque élément de support (10-14 ; 10'-14') présente une butée (17, 18, 19, 22) qui coopère avec un arrêt (16, 20, 21, 70) prévu sur le profilé (3) pour fixer l'élément de support (10-14 ; 10'-14') dans une position prédéterminée dans la direction longitudinale de la broche filetée (2) sur le rail (6) ou le profilé (3).

9. Entraînement linéaire selon l'une des revendications précédentes, **caractérisé en ce que** le mécanisme de serrage (60) est disposé au voisinage du logement (42) et un élément de serrage (61) peut être serré contre le rail (6).

10. Entraînement linéaire selon l'une des revendications précédentes, **caractérisé en ce que** ledit au moins un élément de support (10-14 ; 10'-14') présente un corps de support central (40), sur chacun des côtés opposés duquel est fixée une plaque (46, 49).

11. Entraînement linéaire selon la revendication 10, **caractérisé en ce qu'**une butée (17, 17', 17") est réalisée d'un seul tenant avec une plaque (49, 49', 49").
